# EUROPÄISCHE PATENTSCHRIFT

(11) **EP 3 704 778 B1**
(45) Veröffentlichungstag und Bekanntmachung des Hinweises auf die Patenterteilung: **31.03.2021**
(21) Anmeldenummer: 19706591.5
(22) Anmeldetag: 20.02.2019
(51) Int. Cl.: H02J 3/38, H02S 10/00

(54) **REGELUNGSVERFAHREN FÜR EINE DEZENTRALE ENERGIEERZEUGUNGSANLAGE UND DEZENTRALE ENERGIEERZEUGUNGSANLAGE**
REGULATING METHOD FOR A DECENTRALIZED ENERGY GENERATING SYSTEM, AND DECENTRALIZED ENERGY GENERATING SYSTEM
PROCÉDÉ DE RÉGULATION D'UNE INSTALLATION DE PRODUCTION D'ÉNERGIE DÉCENTRALISÉE ET INSTALLATION DE PRODUCTION D'ÉNERGIE DÉCENTRALISÉE

(30) Priorität: 01.03.2018 DE 102018104666
(43) Veröffentlichungstag der Anmeldung: 09.09.2020
(73) Patentinhaber: SMA Solar Technology AG, 34266 Niestetal (DE)
(72) Erfinder: PREMM, Daniel, 34260 Kaufungen (DE); FUETTERER, Cornelius, 37339 Gernrode (DE); GLITZA, Oliver, 34131 Kassel (DE)
(86) Internationale Anmeldenummer: PCT/EP2019/054187
(87) Internationale Veröffentlichungsnummer: WO 2019/166293

(56) Entgegenhaltungen:
- EP-A1- 2 662 944
- WO-A1-2014/012789
- WO-A1-2017/104302

## Beschreibung

Die Erfindung betrifft ein Verfahren zur Regelung einer dezentralen Energieerzeugungsanlage mit einer Mehrzahl von Wechselrichtern, sowie eine solche Energieerzeugungsanlage.

In einer dezentralen Energieerzeugungsanlage, beispielsweise einem Photovoltaik-Feld oder einem Windpark, wird eine Mehrzahl von Generatoren zusammengeschaltet und gibt eine erzeugte Leistung über einen Netzanschlusspunkt an ein angeschlossenes Netz ab. Zur Steuerung weist die Energieerzeugungsanlage eine zentrale Steuereinheit, auch Parkregler genannt, auf, die sicherstellt, dass am Netzanschlusspunkt bestimmte, vom Netzbetreiber vorgegebene aktuelle Zielwerte einer Wirkleistung und einer Blindleistung bereitgestellt werden. Die zentrale Steuereinheit steuert eine Mehrzahl von Wechselrichtern zur Bereitstellung dieser Zielwerte an, wobei den Wechselrichtern jeweils Generatoren zugeordnet sind und die Wechselrichter die von den Generatoren erzeugte Leistung in eine netzkonforme Wechselspannung umwandeln.

Es ist bekannt, dass die Einhaltung der Zielwerte am Netzanschlusspunkt dadurch erreicht werden kann, dass die zentrale Steuereinheit jedem Wechselrichter eine Frequenzstatik P(f) und/oder eine Spannungsstatik Q(U) vorgibt, und diese gegebenenfalls so abwandelt, dass die von allen Wechselrichtern gemeinsam am Netzanschlusspunkt bereitgestellte Wirkleistung beziehungsweise Blindleistung den Zielwerten entspricht. Gleichzeitig wirkt die dezentrale Energieerzeugungsanlage auf diese Weise auf stabile Netzbedingungen, also auf die Einhaltung von Toleranzbändern der Netzfrequenz f beziehungsweise der Spannungsamplitude U hin.

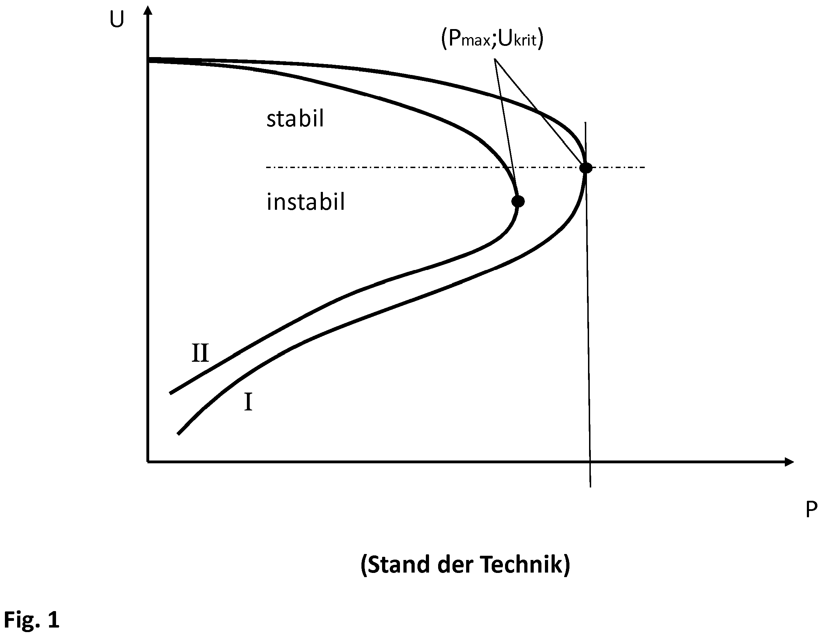

Weiterhin ist bekannt, dass die Aufnahmefähigkeit des Netzes für eingespeiste Leistung begrenzt ist und durch sogenannte "Nose Curves", wie beispielhaft in Fig. 1 gezeigt, beschrieben werden kann. In Fig. 1 ist auf der X-Achse die am Netzanschlusspunkt eingespeiste Wirkleistung aufgetragen, während auf der Y-Achse die Spannungsamplitude am Netzanschlusspunkt aufgetragen ist. Man erkennt anhand zweier, unterschiedlichen Netzzuständen entsprechenden "Nose Curves", bezeichnet mit I, II, dass es bei einer Netzspannung Uₖᵣᵢₜ einen Punkt maximaler Wirkleistungsaufnahme Pₘₐₓ des Netzes gibt. Dieser Punkt trennt einen ersten Wertebereich mit Netzspannungen, die größer als die dem Punkt maximaler Wirkleistungsaufnahme Pₘₐₓ zugeordnete Spannung Uₖᵣᵢₜ sind, und in dem das Netz stabil ist, von einem zweiten Wertebereich mit Netzspannungen, die kleiner als die dem Punkt maximaler Wirkleistungsaufnahme Pₘₐₓ zugeordnete Spannung Uₖᵣᵢₜ sind, und in dem das Netz instabil ist. Es ist daher für einen stabilen Netzbetrieb erforderlich, die dezentrale Energieerzeugungsanlage im ersten Wertebereich so zu betreiben, dass der Punkt maximaler Wirkleistungsaufnahme Pₘₐₓ nicht erreicht oder sogar überschritten wird, da dies zu einem Netzausfall führen kann.

Da sich der Verlauf der "Nose Curve" im Laufe der Zeit verändert, unter anderem auch aufgrund einer variierenden Blindleistungsbereitstellung der dezentralen Energieerzeugungsanlage selbst, verschiebt sich auch der Punkt maximaler Wirkleistungsaufnahme Pₘₐₓ beziehungsweise die zugeordnete Spannung Uₖᵣᵢₜ. Es ist daher nicht möglich, aufgrund eines einfachen Leistungskriteriums oder Spannungskriteriums einen stabilen Einspeisebetrieb der dezentralen Energieerzeugungsanlage sicherzustellen. Vielmehr werden im Stand der Technik dezentrale Energieerzeugungsanlagen nur dann genehmigt, wenn ihre maximal mögliche Wirkleistungseinspeisung unter allen Netzbedingungen kleiner ist als die bei Betrachtung aller möglichen Betriebsbedingungen des Netzes geringste maximale Wirkleistungsaufnahme Pₘₐₓ an deren Netzanschlusspunkt. Dies führt dazu, dass insbesondere in Netzbereichen mit einer auch nur gelegentlich schwachen Netzanbindung keine oder zumindest nur kleine dezentrale Energieerzeugungsanlagen genehmigungsfähig sind. Die Möglichkeiten einer dezentralen Leistungsbereitstellung in ein solches Netz sind damit begrenzt.

Die Druckschrift EP 2 662 944 A1 offenbart ein Verfahren zur Regelung einer Windkraftanlage, bei dem eine Annäherung an einen kritischen Netzzustand durch Bestimmung einer Steigung einer Netzspannungsänderung ΔU als Funktion der Änderung einer eingespeisten Wirkleistung ΔP überwacht und gegebenenfalls durch Reduzierung der eingespeisten Wirkleistung reagiert wird. Hierbei kann die bestimmte Steigung aber auch durch eine Änderung der eingespeisten Blindleistung beeinflusst werden, so dass die Überwachung unzuverlässig ist.

Es ist daher Aufgabe der vorliegenden Erfindung, ein Regelungsverfahren für eine dezentrale Energieerzeugungsanlage und eine dezentrale Energieerzeugungsanlage aufzuzeigen, die zuverlässig erkennen können, dass unter den gegebenen Netzbedingungen die Wirkleistungseinspeisung die Leistungsaufnahmefähigkeit des angeschlossenen Netzes zu übersteigen droht, und die in diesem Fall eigenständig geeignet reagieren, so dass ein stabiler Einspeisebetrieb unter allen auftretenden Netzbedingungen gewährleistet ist.

Diese Aufgabe wird gelöst durch ein Verfahren mit den Merkmalen des unabhängigen Anspruchs 1 beziehungsweise durch eine dezentrale Energieerzeugungsanlage mit den Merkmalen des unabhängigen Anspruchs 7. In den abhängigen Ansprüchen sind bevorzugte Ausführungsformen des Verfahrens beziehungsweise der Energieerzeugungsanlage beschrieben.

Ein Aspekt der vorliegenden Erfindung betrifft ein Verfahren zur Regelung einer dezentralen Energieerzeugungsanlage mit einer Mehrzahl von Wechselrichtern, deren Einspeisung in ein Netz durch Ansteuerung mittels einer zentralen Steuereinheit bestimmt wird. Die zentrale Steuereinheit erfasst und regelt hierbei in einem Normalbetrieb der Energieerzeugungsanlage eine Wirkleistung, eine Blindleistung und eine Spannungsamplitude an einem Netzanschlusspunkt der Energieerzeugungsanlage auf von einem Netzbetreiber vorgegebene Zielwerte, indem die zentrale Steuereinheit diese Zielwerte in individuelle Zielvorgaben für die Mehrzahl der Wechselrichter aufteilt und diese individuellen Zielvorgaben an die Wechselrichtern kommuniziert. Beispielsweise wird den Wechselrichtern durch die zentrale Steuereinheit eine Frequenzstatik P(f) und/oder eine Spannungsstatik Q(U) in Abhängigkeit der Zielwerte vorgegeben, das heißt die Wechselrichter variieren ihre eingespeiste Wirkleistung P als Funktion der gemessenen Netzfrequenz f beziehungsweise passen ihre Blindleistung Q in Abhängigkeit einer gemessenen Spannungsamplitude U an.

Das erfindungsgemäße Regelungsverfahren ist dadurch gekennzeichnet, dass ein Wechsel in einen Sonderbetrieb der Energieerzeugungsanlage erfolgt, wenn in einem vorgebenen Zeitintervall die folgenden drei Ereignisse am Netzanschlusspunkt festgestellt werden:
1. ein Absinken der Spannungsamplitude um mehr als einen vorgegebenen ersten Schwellwert;
2. ein Wirkleistungsanstieg um mehr als einen vorgegebenen zweiten Schwellwert; und
3. eine Blindleistungsänderung, die einen vorgegebenen dritten Schwellwert in Richtung einer Untererregung nicht übersteigt.

Die Überwachung der genannten elektrischen Kenngrößen am Netzanschlusspunkt erfolgt bevorzugt durch die zentrale Steuereinheit. In dem Sonderbetrieb wird die eingespeiste Wirkleistung beziehungsweise Blindleistung nicht mehr anhand der Zielwerte bestimmt. Stattdessen bewirkt die zentrale Steuereinheit eine Reduktion der am Netzanschlusspunkt bereitgestellten Wirkleistung, beispielsweise durch gegenüber dem Normalbetrieb modifiziertes Ansteuern der Wechselrichter, insbesondere durch Kommunikation entsprechend geänderter individueller Sonderzielvorgaben an die Mehrzahl von Wechselrichtern. Dies schließt aber nicht aus, dass die am Netzanschlusspunkt bereitgestellte Wirkleistung weiterhin auch von den Zielwerten mitbestimmt wird, also beispielsweise eine Reduktion der Leistung um einen vorgegebenen Betrag oder einen vorgegebenen Faktor von diesen Zielwerten erfolgt, was ebenfalls denkbar wäre.

In einer bevorzugten Ausführungsform bewirkt die zentrale Steuereinheit in dem Sonderbetrieb unabhängig von den Zielwerten zusätzlich zur Reduktion der Wirkleistung eine Erhöhung der am Netzanschlusspunkt bereitgestellten Blindleistung in Richtung einer Übererregung, beispielsweise indem auch entsprechend geänderte individuelle Sonderzielvorgaben einer Blindleistung an die Wechselrichter kommuniziert werden. Diese Maßnahme führt zu einer zusätzlichen Stabilisierung des Netzes.

Der Wechsel der dezentralen Energieerzeugungsanlage in den Sonderbetrieb kann dem Netzbetreiber signalisiert werden. Ebenso kann eine Rückkehr in den Normalbetrieb dem Netzbetreiber signalisiert werden. Eine Rückkehr in den Normalbetrieb erfolgt, wenn sichergestellt ist, dass eine Einspeisung gemäß der vom Netzbetreiber vorgegebenen Zielwerte einen stabilen Netzzustand nicht gefährdet. Beispielsweise kann unter Beobachtung der Spannungsamplitude am Netzanschlusspunkt die eingespeiste Wirkleistung der dezentralen Energieerzeugungsanlage schrittweise oder kontinuierlich in Richtung auf den entsprechenden Zielwert erhöht und bei Erreichen dieses Zielwerts in den Normalbetrieb zurückgekehrt werden.

Alternativ kann der Netzbetreiber ein geeignetes Steuersignal an die zentrale Steuereinheit übermitteln, wenn der Netzbetreiber sicher ist, dass eine Einspeisung der dezentralen Energieversorgungsanlage entsprechend der Zielwerte zu keinem instabilen Netzzustand führt, woraufhin die zentrale Steuereinheit die dezentrale Energieerzeugungsanlage in den Normalbetrieb zurückführt.

In einer vorteilhaften Ausführungsform erfolgen die Feststellung des Absinkens der Spannungsamplitude und die Feststellung des Wirkleistungsanstiegs durch einen Vergleich von Differenzen von Momentanwerten am Anfang und am Ende des vorgegebenen Zeitintervalls mit den jeweiligen Schwellwerten. Es ist aber beispielsweise auch denkbar, den jeweiligen Maximalwert und den jeweiligen Minimalwert innerhalb des vorgegebenen Zeitintervalls bei der Differenzbildung heranzuziehen. Selbstverständlich können anstelle von Momentanwerten auch geeignet gemittelte Werte herangezogen werden.

Die Dauer des vorgegebenen Zeitintervalls wird vorzugsweise zwischen 1 Sekunden und 10 Minuten gewählt, wobei kürzere Intervalle eine schnellere Reaktionszeit der dezentralen Energieerzeugungsanlage, aber auch eine erhöhte Wahrscheinlichkeit für eine Fehlauslösung des Sonderbetriebs zur Folge haben.

Es ist auch in einer Abwandlung des erfindungsgemäßen Verfahrens denkbar, mehrere, zum Beispiel zwei Zeitintervalle unterschiedlicher Länge für die Überprüfung der Kriterienerfüllung zum Wechsel in den Sonderbetrieb vorzusehen, wobei den Zeitintervallen unterschiedlicher Länge auch unterschiedliche erste bis dritte Schwellwerte zugeordnet sind. Ein Wechsel in den Sonderbetrieb kann erfolgen, wenn die Kriterien für ein beliebiges der Zeitintervalle erfüllt ist, oder wenn die Kriterien in mehreren oder gar allen Zeitintervallen gleichzeitig oder in hinreichend kurzer Zeitfolge erfüllt sind.

In einem weiteren Aspekt der Erfindung weist eine dezentrale Energieerzeugungsanlage mit einer Mehrzahl von Wechselrichtern eine zentrale Steuereinheit auf, die zur Ansteuerung der Mehrzahl von Wechselrichtern eingerichtet ist, wobei die Ansteuerung in einem Normalbetrieb eine Aufteilung und eine Kommunikation individueller Zielvorgaben, beispielsweise einer Frequenzstatik Q(U) und/oder einer Spannungsstatik P(f), an die Mehrzahl von Wechselrichtern in Abhängigkeit von durch eine Netzbetreiber vorgegebenen Zielwerten für eine Einspeisung von Wirkleistung und Blindleistung in ein Netz über einen Netzanschlusspunkt der dezentralen Energieerzeugungsanlage umfasst. Eine erfindungsgemäße dezentrale Energieerzeugungsanlage ist dadurch gekennzeichnet, dass die zentrale Steuereinheit dazu eingerichtet ist, einen Wechsel in einen Sonderbetrieb der Energieerzeugungsanlage zu bewirken, in dem durch ein gegenüber dem Normalbetrieb modifiziertes Ansteuern der Wechselrichter eine Reduktion der am Netzanschlusspunkt bereitgestellten Wirkleistung gegenüber den Zielwerten erfolgt, wenn in einem vorgebenen Zeitintervall die folgenden drei Ereignisse am Netzanschlusspunkt festgestellt werden:
1. ein Absinken der Spannungsamplitude um einen vorgegebenen ersten Schwellwert;
2. ein Wirkleistungsanstieg um einen vorgegebenen zweiten Schwellwert; und
3. eine Blindleistungsänderung, die einen vorgegebenen dritten Schwellwert in Richtung einer Untererregung nicht übersteigt.

Eine solche dezentrale Energieerzeugungsanlage kann derart dimensioniert werden, dass ihre maximal mögliche Wirkleistungsabgabe größer ist als eine maximal zulässige Wirkleistungsaufnahmefähigkeit des am Netzanschlusspunkt angeschlossenen Netzes unter Berücksichtigung von einem Leistungsaustausch anderer an dem Netz angeschlossener Netzteilnehmer. Eine solche maximal zulässige Wirkleistungsaufnahmefähigkeit wird bestimmt durch den geringsten Wert, den die maximale Wirkleistungsaufnahme Pₘₐₓ an dem Netzanschlusspunkt im Rahmen eines "worst-case" Szenarios haben kann, gegebenenfalls unter Berücksichtigung einer zusätzlichen Sicherheitsmarge. Dies erlaubt den Anschluss von dezentralen Energieerzeugungsanlagen mit einer derart hohen maximalen Einspeiseleistung, dass sie mit Regelverfahren nach dem Stand der Technik aufgrund einer möglichen Destabilisierung des Netzes nicht genehmigungsfähig wären.

Im Folgenden wird die Wirkungsweise der Erfindung anhand von Figuren näher erläutert, von denen
- Fig. 1: typische Verläufe von sogenannten "Nose-Curves",
- Fig. 2: eine erfindungsgemäße Energieerzeugungsanlage, und
- Fig. 3: eine Veränderung von "Nose-Curves" und Arbeitspunkten einer Einspeisung einer erfindungsgemäßen Energieerzeugungsanlage auf diesen "Nose-Curves" zur beispielhaften Veranschaulichung des erfindungsgemäßen Regelungsverfahrens zeigen.

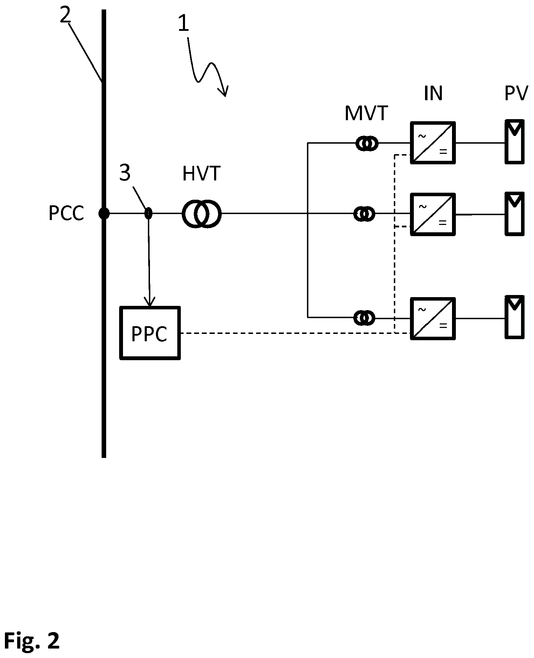

Fig. 2 zeigt eine erfindungsgemäße Energieerzeugungsanlage 1, die zur Einspeisung elektrischer Leistung in ein Netz 2, in diesem Fall ein Hochspannungsnetz, an einem Netzanschlusspunkt PCC an das Netz 2 angeschlossen ist. Die Energieerzeugungsanlage 1 weist eine Mehrzahl von Generatoren PV auf, in diesem Fall Photovoltaikgeneratoren, die jeweils an einen ihnen zugeordneten Wechselrichter IN angeschlossen sind. Ausgangsseitig sind die Wechselrichter IN über einen Mittelspannungstransformator MVT miteinander und der Mittelspannungstransformator MVT mit einer Primärseite eines Hochspannungstransformators HVT verbunden. Die Sekundärseite des Hochspannung HVT ist wiederum mit dem Netzanschlusspunkt PCC verbunden. Zwischen der Sekundärseite des Hochspannungstransformators HVT und dem Netzanschlusspunkt PCC ist eine Messstelle 3 angeordnet, die Netzparameter des Netzes 2 und Einspeiseparameter der Energieerzeugungsanlage 1 bestimmt und an einen eine zentrale Steuereinheit PPC übermittelt. Die Netzparameter können eine Spannung und eine Frequenz des Netzes 2 umfassen, die Einspeiseparameter eine Wirkleistung und eine Blindleistung der Energieerzeugungsanlage 1. Je nach räumlicher Ausdehnung und Nennleistung der Energieerzeugungsanlage 1 können innerhalb der Anlage auch mehr oder weniger Spannungsniveaus durch Hinzufügen oder Weglassen von Transformatoren realisiert sein.

Neben den von der Messstelle 3 bestimmten Parametern ist die Steuereinheit PPC weiterhin zum Empfang von Zielwerten für die Wirkleistung und/oder die Blindleistung der Energieerzeugungsanlage 1 eingerichtet, die von einem Netzbetreiber vorgegeben werden. In einem Normalbetrieb der Energieerzeugungsanlage 1 regelt die Steuereinheit PPC die am Netzanschlusspunkt PCC eingespeisten Blindleistungs- und Wirkleistungswerte auf die vorgegebenen Zielwerte, indem sie die Zielwerte in individuelle Zielvorgaben für jeden der Wechselrichter IN umrechnet und diese individuellen Zielvorgaben an die entsprechenden Wechselrichter IN kommuniziert, wie durch die gestrichelten Linien veranschaulicht.

Sowohl die vorgegebenen Zielwerte des Netzbetreibers als auch die individuellen Zielvorgaben für die Mehrzahl der Wechselrichter IN können unterschiedliche Formate aufweisen. Beispielsweise ist es möglich, absolute Leistungswerte, relative Leistungswerte bezogen auf die aktuell verfügbare Leistung oder Kennlinien, beispielsweise in Parameterform, vorzugeben. So kann Wirkleistung, relativ oder absolut, beispielsweise als Kennlinie P(f) = P₀-c_{P}*(f-f₀) vorgegeben werden, wobei Po eine Referenzleistung, fo eine Referenzfrequenz, f eine durch die Messstelle 3 bestimmte Netzfrequenz und c_{P} eine Kennliniensteilheit ist. Entsprechend kann für die Blindleistung eine Kennlinie Q(U)=Q₀+c_{Q}*(U-U₀) vorgegeben werden mit einer Referenzleistung Q₀, einer Referenzspannung Uo, einer durch die Messstelle 3 bestimmten Netzspannungsamplitude U und einer Kennliniensteilheit c_{Q}. Es ist aber auch denkbar, dass als Zielwerte oder Zielvorgaben lediglich Grenzwerte kommuniziert werden, die nicht überschritten beziehungsweise unterschritten werden dürfen. Weitere bekannte Formen der Vorgabe von Zielwerten sind ebenfalls denkbar.

Das erfindungsgemäße Verfahren, insbesondere die Prüfung, ob die drei für einen Wechsel in den Sonderbetrieb der Energieerzeugungsanlage 1 relevanten Kriterien vorliegen, wird bevorzugt in der zentralen Steuereinheit PPC ausgeführt. Hierzu speichert die Steuereinheit PPC die von der Messstelle 3 erfassten Werte der Spannungsamplitude, der Wirkleistung und der Blindleistung für eine Auswertung innerhalb der vorgegebenen Zeitintervalle. Die erfassten Werte können selbstverständlich zur Reduzierung von Messfehlern geeignet gefiltert oder gemittelt werden. Innerhalb der Auswertung bestimmt die Steuereinheit PPC beispielsweise die Minimalwerte und Maximalwerte der Spannungsamplitude, der Wirkleistung und der Blindleistung, errechnet hieraus durch Differenzbildung einen Anstieg beziehungsweise ein Absinken der Werte innerhalb des Zeitintervalls und vergleicht den errechneten Anstieg beziehungsweise das Absinken mit den entsprechenden hinterlegten Schwellwerten. Bei Erfüllung aller drei Kriterien innerhalb eines Zeitintervalls wechselt die zentrale Steuereinheit PPC in den Sonderbetrieb. Im Sonderbetrieb wird die eingespeiste Wirkleistung der Energieerzeugungsanlage 1 soweit reduziert, dass eine Einspeisung einer Wirkleistung, die die Aufnahmekapazität des Netzes 2 überschreitet, ausgeschlossen ist. Die Reduktion kann hierbei als ein absoluter Betragswert, als ein Prozentsatz der Nennleistung oder der aktuell verfügbaren Leistung der Energieerzeugungsanlage 1 oder auf andere Weise vorgegeben werden.

Ein Wechsel in den Sonderbetrieb kann den Netzbetreiber durch ein entsprechendes Kommunikationssignal mitgeteilt werden. Ebenso kann ein Wechsel in den Sonderbetrieb durch ein Kommunikationssignal des Netzbetreibers erzwungen werden. Im Sonderbetrieb ist es denkbar, dass die zentrale Steuereinheit PPC weiterhin auf Änderungen der Zielwerte durch den Netzbetreiber reagiert und seine Einspeisung von Wirkleistung beziehungsweise Blindleistung entsprechend anpasst.

Für eine Rückkehr in den Normalbetrieb kann die Steuereinheit PPC versuchen, die eingespeiste Wirkleistung stufenweise oder kontinuierlich bis auf die vom Netzbetreiber vorgegebenen Zielwerte zu erhöhen und dabei kontinuierlich die Netzparameter mithilfe der Messstelle 3 überwachen. Bei Erreichen der vorgegebenen Zielwerte, ohne dass sich bedenkliche Werte der Netzparameter ergeben, kann die Energieerzeugungsanlage 1 in den Normalbetrieb zurückkehren. Diese Rückkehr kann ebenfalls mit einem entsprechenden Kommunikationssignal den Netzbetreiber mitgeteilt werden, beziehungsweise eine Rückkehr in den Normalbetrieb kann durch ein Kommunikationssignal des Netzbetreibers erzwungen werden.

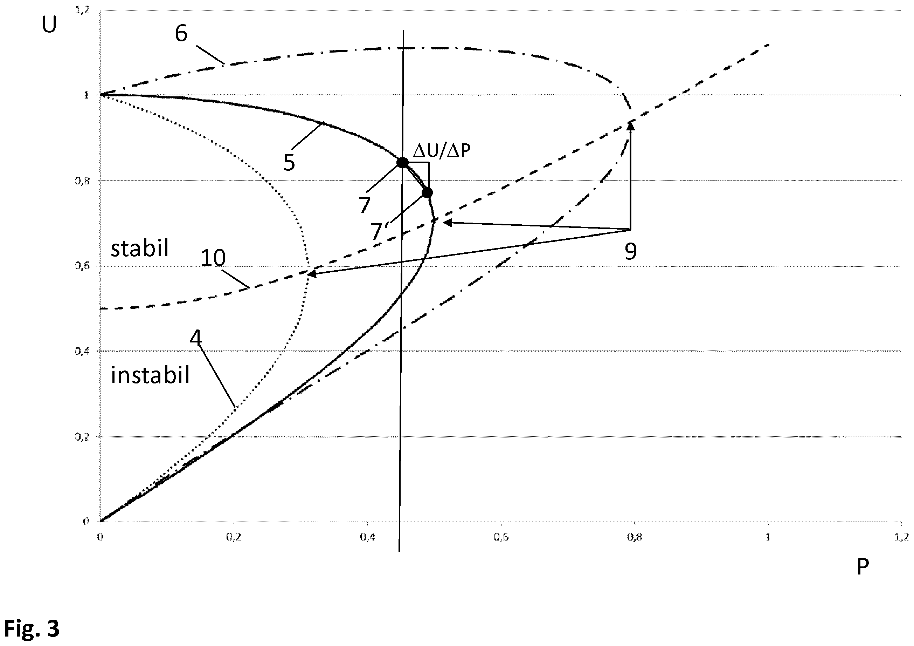

Fig. 3 zeigt idealisierte Verläufe von "Nose Curves" bei unterschiedlichen Leistungsfaktoren cos φ als Funktion der eingespeisten Leistung P. So ist Nose Curve 5 ein Verlauf, der sich bei einem Leistungsfaktor cos φ=1 ergibt, Nose Curve 6 ist einem übererregtem Leistungsfaktor cos φ=0,9 und Nose Curve 6 ist einem untererregtem Leistungsfaktor cos φ=0,9 zugeordnet. Leistung P und Spannung U sind hierbei normiert aufgetragen. Jede Nose Curve hat einen Maximalleistungspunkt 9, dessen Lage bei sich änderndem Leistungsfaktor durch die Kurve 10 wiedergegeben wird, die gleichzeitig den stabilen Betriebsbereich vom instabilen Betriebsbereich der Energieerzeugungsanlage 1 am Netz trennt. Die eingespeiste Leistung darf diesen Maximalleistungspunkt nicht überschreiten, um stabile Netzverhältnisse zu gewährleisten. Hierzu ist es erforderlich festzustellen, wann ein Arbeitspunkt in die Nähe eines maximalen Leistungspunkts gerät.

Zur Veranschaulichung der gewählten drei Kriterien zum Wechsel in den Sonderbetrieb wird Arbeitspunkt 7 auf der Nose Curve 5 gewählt.

Um festzustellen, ob ein aktueller Arbeitspunkt sich in der Nähe eines Maximalleistungspunktes befindet und sich auf diesen zubewegt, werden die Änderungen der Spannungsamplitude und der eingespeisten Wirkleistung am Netzanschlusspunkt PCC in einem Zeitintervall bestimmt. Nur wenn sich der aktuelle Arbeitspunkt in einem Bereich einer Nose Curve mit ausreichend hoher negativer Steigung befindet (wie hier der Arbeitspunkt 7 auf der Nose Curve 5), können gleichzeitig sowohl ein Absinken der Spannungsamplitude als auch ein Anstieg der Wirkleistung die ihnen zugeordneten Schwellwerte übersteigen. Dies ist in Fig. 3 durch den Übergang vom Arbeitspunkt 7 auf den Arbeitspunkt 7' veranschaulicht, bei dem das Absinken der Spannungsamplitude ΔU und der Anstieg der eingespeisten Leistung ΔP dargestellt sind.

Allerdings kann ein Absinken der Spannungsamplitude auch durch eine Änderung der Blindleistung in Richtung einer Untererregung verursacht werden. Veranschaulicht wird dies durch die Nose Curve 4, deren Spannungswerte U im stabilen Bereich der Nose Curve bei allen erreichbaren Werten der Wirkleistung P unter den Spannungswerten der Nose Curve 5 liegt. Um diese Ursache auszuschließen, wird das Kriterium überprüft, ob eine Blindleistungsänderung in Richtung einer Untererregung vorliegt, die den Abfall der Spannungsamplitude verursacht oder mitverursacht haben könnte. Nur wenn dies nicht der Fall ist, wird in den Sonderbetrieb gewechselt.

Es ist denkbar, dass die drei Kriterien nicht zuverlässig jede Annäherung an einen maximalen Leistungspunkt und somit die Gefahr eines Wechsels in den instabilen Bereich der Nose Curves erkennen, aber in der Praxis reichen die Kriterien bei geeigneter Wahl von Schwellwerten und Zeitintervallen aus, um stabile Betriebsbedingungen der Energieerzeugungsanlage zu gewährleisten.

### Bezugszeichenliste

- 1: Energieerzeugungsanlage
- 2: Netz
- 3: Messstelle
- 4-6: Nose Curve
- 7,7': Arbeitspunkt
- 9: Maximalleistungspunkt
- 10: Kurve
- PCC: Netzanschlusspunkt
- HVT: Hochspannungstransformator
- MVT: Mittelspannungstransformator
- IN: Wechselrichter
- PV: Generator
- PPC: Steuereinheit

## Patentansprüche

1. Verfahren zur Regelung einer dezentralen Energieerzeugungsanlage (1) mit einer Mehrzahl von Wechselrichtern (IN), deren Einspeisung in ein Netz (2) durch Ansteuerung mittels einer zentralen Steuereinheit (PPC) bestimmt wird, wobei die zentrale Steuereinheit (PPC) eine Wirkleistung, eine Blindleistung und eine Spannungsamplitude an einem Netzanschlusspunkt (PCC) der Energieerzeugungsanlage (1) erfasst und in einem Normalbetrieb der Energieerzeugungsanlage (1) die Blindleistung und die Wirkleistung auf von einem Netzbetreiber vorgegebene Zielwerte regelt, indem die zentrale Steuereinheit (PPC) die vorgegebenen Zielwerte in individuelle Zielvorgaben für die Mehrzahl der Wechselrichter (IN) aufteilt und die individuellen Zielvorgaben an die Wechselrichter (IN) kommuniziert,
wobei ein Wechsel in einen Sonderbetrieb der Energieerzeugungsanlage (1) stattfindet, wenn in einem vorgegebenen Zeitintervall die folgenden Kriterien am Netzanschlusspunkt (PCC) vorliegen:
- ein Absinken der Spannungsamplitude um mehr als einen vorgegebenen ersten Schwellwert; und
- ein Wirkleistungsanstieg um mehr als einen vorgegebenen zweiten Schwellwert,
wobei die zentrale Steuereinheit (PPC) in dem Sonderbetrieb gegenüber den vorgegebenen Zielwerten eine Reduktion der am Netzanschlusspunkt (PCC) bereitgestellten Wirkleistung bewirkt,
**dadurch gekennzeichnet, dass**
der Wechsel in den Sonderbetrieb der Energieerzeugungsanlage nur stattfindet, wenn zusätzlich in dem vorgegebenen Zeitintervall eine Blindleistungsänderung einen vorgegebenen dritten Schwellwert in Richtung einer Untererregung nicht übersteigt.

2. Verfahren nach Anspruch 1, wobei die zentrale Steuereinheit (PPC) in dem Sonderbetrieb unabhängig von den vorgegebenen Zielwerten zusätzlich eine Änderung der am Netzanschlusspunkt (PCC) bereitgestellten Blindleistung in Richtung einer Übererregung bewirkt.

3. Verfahren nach Anspruch 1 oder 2, wobei die Feststellung des Absinkens der Spannungsamplitude und des Wirkleistungsanstiegs durch einen Vergleich von Differenzen von Momentanwerten am Anfang und am Ende des vorgebenen Zeitintervalls mit den jeweiligen Schwellwerten erfolgt.

4. Verfahren nach einem der vorangehenden Ansprüche, wobei die zentrale Steuereinheit (PPC) eine Reduktion der am Netzanschlusspunkt (PCC) bereitgestellten Wirkleistung und/oder eine Änderung der am Netzanschlusspunkt (PCC) bereitgestellten Blindleistung in Richtung einer Übererregung durch Kommunikation gegenüber den individuellen Zielvorgaben entsprechend geänderter individueller Sonderzielvorgaben an die Wechselrichter (IN) bewirkt.

5. Verfahren nach einem der vorangehenden Ansprüche, wobei der Wechsel in den Sonderbetrieb der Energieerzeugungsanlage (1) an den Netzbetreiber signalisiert wird.

6. Verfahren nach einem der vorangehenden Ansprüche, wobei eine Rückkehr in den Normalbetrieb durch Kommunikation eines Steuersignals des Netzbetreibers an die zentrale Steuereinheit (PPC) erfolgt.

7. Dezentrale Energieerzeugungsanlage (1) mit einer Mehrzahl von Wechselrichtern (IN) und einer zentrale Steuereinheit (PPC), die zur Ansteuerung der Mehrzahl von Wechselrichtern (IN) eingerichtet ist, wobei die Ansteuerung in einem Normalbetrieb eine Aufteilung und eine Kommunikation individueller Zielvorgaben an die Mehrzahl von Wechselrichtern (IN) in Abhängigkeit von durch eine Netzbetreiber vorgegebenen Zielwerten für eine Einspeisung von Wirkleistung und Blindleistung in ein Netz (2) über einen Netzanschlusspunkt (PCC) der dezentralen Energieerzeugungsanlage (1) umfasst,
wobei die zentrale Steuereinheit (PPC) dazu eingerichtet ist, einen Wechsel in einen Sonderbetrieb der Energieerzeugungsanlage (1) zu bewirken, in dem eine Reduktion der am Netzanschlusspunkt (PCC) bereitgestellten Wirkleistung gegenüber den Zielwerten erfolgt, wenn in einem vorgegebenen Zeitintervall die folgenden Kriterien am Netzanschlusspunkt (PCC) vorliegen:
- ein Absinken der Spannungsamplitude um einen vorgegebenen ersten Schwellwert; und
- ein Wirkleistungsanstieg um einen vorgegebenen zweiten Schwellwert;
**dadurch gekennzeichnet, dass**
der Wechsel in den Sonderbetrieb nur bewirkt wird, wenn zusätzlich in dem vorgegebenen Zeitintervall eine Blindleistungsänderung einen vorgegebenen dritten Schwellwert in Richtung einer Untererregung nicht übersteigt.

8. Dezentrale Energieerzeugungsanlage (1) nach Anspruch 7, wobei eine maximal mögliche Wirkleistungsabgabe der Energieerzeugungsanlage (1) größer ist als eine maximal zulässige Wirkleistungsaufnahmefähigkeit des am Netzanschlusspunkt (PCC) angeschlossenen Netzes (2) unter Berücksichtigung von einem Leistungsaustausch anderer an dem Netz (2) angeschlossener Netzteilnehmer.

## Claims

1. A method for controlling a decentralized power generation system (1) with a plurality of inverters (IN), the feed of which into a grid (2) is determined by regulation by means of a central control unit (PPC), the central control unit (PPC) determining an active power, a reactive power and a voltage amplitude at a Point of Common Coupling (PCC) of the power generation system (1) and, in normal operation of the power generation system (1), regulating the reactive power and the active power to target values specified by a grid operator by splitting the specified target values into individual target values for the plurality of the inverters (IN) and by communicating the individual target values to the inverters (IN), wherein a change to a special operation of the power generation system (1) takes place if the following criteria are met at the Point of Common Coupling PCC) within a specified time interval:
- a decrease of the voltage amplitude by more than a specified first threshold value; and
- an increase in active power by more than a specified second threshold value,
wherein the central control unit (PPC) in the special operation causes a reduction of the active power provided at the Point of Common Coupling (PCC) compared to the specified target values,
**characterized in that**
the change to special operation of the power generation system only takes place if, in addition, in the specified time interval a change in reactive power does not exceed a specified third threshold value in the direction of underexcitation.

2. The method according to claim 1, wherein the central control unit (PPC) in the special operation further causes a change of the reactive power provided at the Point of Common Coupling (PCC) in the direction of overexcitation, independently of the specified target values.

3. The method according to claim 1 or 2, wherein the determination of the decrease of the voltage amplitude and the increase of the active power is performed by a comparison of differences of instantaneous values at the beginning and at the end of the specified time interval to the respective threshold values.

4. The method according to any one of the preceding claims, wherein the central control unit (PPC) causes a reduction of the active power provided at the Point of Common Coupling (PCC) and/or a change of the reactive power provided at the Point of Common Coupling (PCC) in the direction of overexcitation by communicating special target values to the inverters (IN) that are respectively changed relative to the individual target values.

5. The method according to any one of the preceding claims, wherein the change to special operation of the power generation system (1) is signalled to the grid operator.

6. The method according to any one of the preceding claims, wherein a return to normal operation is caused by communication of a control signal of the grid operator to the central control unit (PPC).

7. A decentralized power generation system (1) with a plurality of inverters (IN) and a central control unit (PPC) configured to control the plurality of inverters (IN), wherein the control in normal operation comprises a splitting and a communication of individual target values to the plurality of inverters (IN) as a function of target values specified by a grid operator for a feed-in of active power and reactive power into a network (2) via a Point of Common Coupling (PCC) of the decentralized power generation system (1),
wherein the central control unit (PPC) is configured to cause a change to a special mode of the power generation system (1), in which a reduction of the active power compared to the target values and provided at the Point of Common Coupling (PCC) is caused, if the following criteria are present at the Point of Common Coupling (PCC) within a specified time interval
- a decrease of the voltage amplitude by a predetermined first threshold value; and
- an increase of active power by a predetermined second threshold value;
**characterized in that**
the change to special mode is only caused if, in addition, a change in reactive power does not exceed a predetermined third threshold value in the direction of underexcitation in the specified time interval.

8. The decentralized power generation system (1) according to claim 7, wherein a maximum possible active power output of the power generation system (1) is greater than a maximum permissible active power absorption capacity of the grid (2) connected to the Point of Common Coupling (PCC) taking into account a power exchange of other network participants connected to the grid (2).

## Revendications

1. Procédé de commande d'un système de production énergétique décentralisé (1) comportant plusieurs onduleurs (IN) dont l'injection dans un réseau (2) est déterminée par la commande au moyen d'une commande centrale (PPC), dans lequel la commande centrale (PPC) détecte une puissance active, une puissance réactive et une amplitude de tension à un point de raccordement au réseau (PCC) du système de production énergétique (1) et règle la puissance réactive et la puissance active sur des valeurs cibles prédéfinies par un exploitant de réseau en fonctionnement normal du système de production énergétique (1), en ce que la commande centrale (PPC) divise les valeurs cibles prédéterminées en cibles individuelles pour la pluralité d'onduleurs (IN) et communique les cibles individuelles aux onduleurs (IN), une modification du fonctionnement spécial du système de production énergétique (1) ayant lieu si les critères suivants sont présents au point de raccordement au réseau (PCC) dans un intervalle de temps prédéterminé :
- une diminution de l'amplitude de la tension de plus d'une première valeur limite prédéterminée ; et
- une augmentation de la puissance active de plus d'une deuxième valeur limite
spécifiée,
où la commande centrale (PPC) en mode spécial provoque une réduction de la puissance active fournie au point de raccordement au réseau (PCC) par rapport aux valeurs cibles spécifiées,
**caractérisé en ce que**
le passage à un fonctionnement spécial du système de production d'électricité n'a lieu que si, en outre, une modification de la puissance réactive ne dépasse pas une troisième valeur limite prédéterminée dans le sens d'une sous-excitation dans l'intervalle de temps spécifié.

2. Procédé selon la revendication 1, dans lequel la commande centrale (PPC) en mode spécial, indépendamment des valeurs cibles prédéterminées, provoque en outre une modification de la puissance réactive fournie au point de raccordement au réseau (PCC) dans le sens de la surexcitation.

3. Procédé selon la revendication 1 ou 2, dans lequel la détermination de la diminution de l'amplitude de tension et de l'augmentation de la puissance active est effectuée en comparant les différences de valeurs instantanées au début et à la fin de l'intervalle de temps prédéterminé avec les valeurs limites respectives.

4. Procédé selon l'une des revendications précédentes, dans lequel la commande centrale (PPC) effectue une réduction de la puissance active fournie au point de raccordement au réseau (PCC) et/ou une modification de la puissance réactive fournie au point de raccordement au réseau (PCC) dans le sens de la surexcitation par communication par rapport aux cibles individuelles au moyen d'une communication avec les onduleurs (IN) en fonction des cibles spéciales individuelles modifiées.

5. Procédure selon l'une des revendications précédentes, par laquelle le passage au mode spécial du système de production énergétique (1) est signalé à l'exploitant du réseau.

6. Procédé selon l'une des revendications précédentes, dans lequel un retour au fonctionnement normal est effectué par la communication d'un signal de commande de l'opérateur de réseau à la commande centrale (PPC).

7. Système de production énergétique décentralisé (1) avec une pluralité d'onduleurs (IN) et une commande centrale (PPC) qui est conçue pour commander la pluralité d'onduleurs (IN), la commande en fonctionnement normal comprenant une distribution et une communication de valeurs cibles individuelles à la pluralité d'onduleurs (IN) en fonction de valeurs cibles spécifiées par un exploitant de réseau pour l'alimentation en puissance active et en puissance réactive d'un réseau (2) par l'intermédiaire d'un point de raccordement au réseau (PCC) de la centrale électrique décentralisée (1),
dans laquelle la commande centrale (PPC) est configurée pour effectuer un changement vers un mode spécial du système de production énergétique (1), dans lequel une réduction de la puissance active fournie au point de raccordement au réseau (PCC) par rapport aux valeurs cibles a lieu si les critères suivants sont présents au point de raccordement au réseau (PCC) dans un intervalle de temps prédéterminé :
- une diminution de l'amplitude de la tension d'une première valeur limite prédéterminée ; et
- une augmentation de la puissance active d'une deuxième valeur limite spécifiée;
**caractérisé en ce que**
le passage en mode spécial n'est effectué que si, en outre, une modification de la puissance réactive ne dépasse pas une troisième valeur seuil prédéterminée dans le sens de la sous-excitation dans l'intervalle de temps spécifié.

8. Système de production énergétique décentralisé (1) selon la revendication 7, dans lequel une puissance active maximale possible du système de production énergétique (1) est supérieure à une capacité d'absorption de puissance active maximale admissible du réseau (2) connecté au point de raccordement au réseau (PCC), en tenant compte d'un échange de puissance d'autres participants au réseau connectés au réseau (2).
